# EUROPEAN PATENT SPECIFICATION

(11) **EP 0 365 285 B1**
(45) Date of publication and mention of the grant of the patent: **07.12.1994**
(21) Application number: 89310661.7
(22) Date of filing: 17.10.1989
(51) Int. Cl.: G05B 19/04

(54) **Method of diagnosing sequence program for use in sequence controller**
Methode zur Diagnose von Folgeprogrammen, verwendbar in einer Folgesteuerungsanlage
Méthode de diagnostic de programme séquentiel pour utilisation dans un contrôleur séquentiel

(30) Priority: 18.10.1988 JP 262455/88
(43) Date of publication of application: 25.04.1990
(73) Proprietor: NGK INSULATORS, LTD., Nagoya City Aichi Pref. (JP)
(72) Inventor: Nakano, Toru, Ama-Gun Aichi Pref. (JP); Yasuda, Yashimasa, Kasugai City Aichi Pref. (JP)
(74) Representative: Calderbank, Thomas Roger

(56) References cited:
- EP-A- 0 283 382
- DE-A- 3 005 872
- FR-A- 2 587 812

## Description

The present invention relates to a method of diagnosing or debugging a sequence control program for use in a sequence controller.

Heretofore, after the sequence control program for use in the sequence controller has been formed by utilizing a keyboard and a display monitor provided in the sequence controller, the sequence control program is checked whether or not the sequence controller could correctly control an apparatus to be controlled thereby in accordance with the sequence control program. This checking operation has been done by using the human intellect. After the checking has been completed, the sequence controller is actually operated in accordance with the sequence control program to control the apparatus such as feeding apparatus, manufacturing apparatus, assembling apparatus and working apparatus to effect the actual operation. However, since the human intellect has a limitation, all possible occasions could not be taken into consideration. Therefore, the sequence control program might include errors and the apparatus could not be controlled correctly by means of the sequence controller. In this case, the sequence control program has to be debugged by connecting the sequence controller to the actual apparatus and actually running the sequence control program. It is apparent that this operation requires a lot of labor work and time. Moreover, there is a danger that the apparatus to be controlled by the sequence controller might be broken during the checking operation due to timing errors in the sequence program.

There has been developed a simulation device for checking the sequence program for use in the sequence controller without actually operating the apparatus. This simulation device comprises a plurality of manually operated switches for entering dummy operation inputs to the sequence controller as execution signals and a plurality of lamps for monitoring command signals supplied from the sequence controller. It should be noted that in the actual control operation the execution signals are produced by detection devices such as limit switches provided in the apparatus. In this known simulation device, the switches have to be manually actuated by the operator by monitoring the lit condition of the lamps, so that human errors could not be avoided and the checking time becomes long. Particularly, the operator could not find errors in the sequence program which might occur when one or more apparatuses are actually operated under the control of the sequence controller. Furthermore, the simulation device must comprise a large number of switches each of which corresponds to a respective operation of the apparatus, so that the simulation device is liable to be complicated in construction and expensive in cost.

The present invention seeks to provide a novel and useful method of diagnosing or debugging the sequence program for use in the sequence controller without having to operate the apparatus to be controlled by the sequence controller in accordance with the relevant sequence program, so that the debugging operation can be carried out easily and safely within a short time period.

EP-A-0283382 discloses a method of verifying the operation of a controller in which the controller is connected to a separate, external simulator and microcomputer which simulates the operation of the apparatus. This document corresponds to the pre-characterising part of claim 1.

The present invention, on the other hand, provides a method of diagnosing a sequence control program for control of an apparatus by a sequence controller, wherein the apparatus is not required to be operated by the sequence controller during diagnosis, comprising:
storing a sequence control program to be diagnosed in the sequence controller, which sequence control program is adapted to generate command signals for associated output components connected to operate associated devices of the apparatus, by performing processing on a series of input signals;
generating and storing a dummy operation program which is adapted to generate a series of dummy signals in response to the command signals generated by the sequence control program, the series of dummy signals being signals predicted to correspond to a series of execution signals to be generated by an associated series of the apparatus in response to the command signals;
wherein:
the dummy operation program is stored in the sequence controller, and the method further comprises:
combining the sequence control program and the dummy operation program to form, respectively, a control part and a dummy part of a preliminary simulation program;
configuring the preliminary simulation program so that the series of input signals of the control part is obtained from the series of dummy signals generated by the dummy part via link components, which are not operatively connected to the series of input devices of the apparatus, thereby to form a simulation program having respectively a control part and a dummy part;
executing the simulation program, while simulated operating conditions of the apparatus are monitored;
verifying the simulated operation of the apparatus, and correcting errors in at least the control part of the simulation program;
extracting the control part of the simulation program to form a tested program;
re-configuring the tested program so that the series of input signals is obtained from the series of execution signals from the associated series of input devices of the apparatus via execution components to form a diagnosed sequence control program.

Preferably, the link components are provided inside the sequence controller.

The present invention has been done on the basis of the following fact. The sequence controller has a number of relays installed therein and these relays may be utilized to debug the sequence program. For instance, link relays termed as B relay are generally used to connect a plurality of sequence controllers in series with each other. Further, the sequence controller usually comprises a number of internal relays called M relay. These relays may be utilized to generate the execution signals during the checking operation. In the actual sequence control operation, the execution signals are generated by various devices for detecting the completion of desired operation. For instance, limit switches are used to detect the completion of the movement. In a preferred embodiment of the method according to the present invention, the simulation program is formed such that the execution signals are generated by the relays inherently provided in the existent sequence controller, so that the sequence control program can be diagnosed in a simple and positive manner.

In a preferred embodiment of the method according to the invention, the simulation program is stopped at will so that any step in the sequence control program can be investigated in detail. Further any desired step in the sequence control can be selectively executed by directly accessing an address of the relevant step. Further the execution speed of the simulation program can be changed by changing the frequency of the clock pulse. In this manner, according to the invention, the sequence control program can be checked or debugged easily and positively within a short time period.

The invention will now be described in detail with reference to the accompanying drawings, wherein:
Fig. 1 is a schematic view showing the article transferring apparatus to be controlled by the sequence controller;
Fig. 2 is a timing chart illustrating the operation of the apparatus shown in Fig. 1;
Fig. 3 is a schematic view denoting the whole construction of the apparatus for diagnosing the sequence program according to the invention;
Fig. 4 is a timing chart of a part of the sequential operation for explaining the simulation program;
Fig. 5 is a ladder diagram of the sequence control program;
Fig. 6 is a ladder diagram of the dummy operation program;
Fig. 7 is a ladder diagram of the simulation program formed by combining the programs shown in Figs. 5 and 6;
Figs. 8A, 8B and 8C are schematic views illustrating an example of schematic images displayed on the monitor screen during the debugging operation;
Figs. 9A and 9B are schematic views showing another example of the image displayed on the monitor during the checking operation; and
Fig. 10 is a block diagram representing successive steps of the debugging method according to the invention.

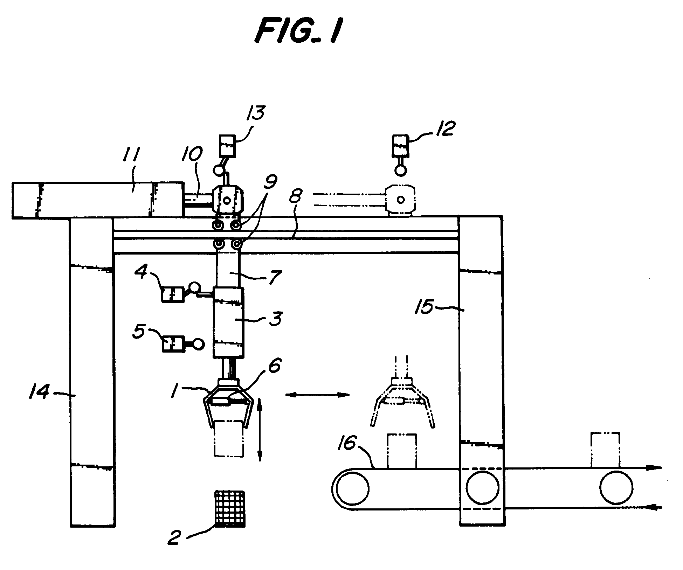

Fig. 1 is a schematic view showing an embodiment of the apparatus to be controlled by the sequence controller. In the present embodiment, the apparatus is to transfer articles successively onto a belt-conveyer. To this end, a chuck 1 for grasping an article 2 is secured to a lower end of a piston rod of an air cylinder 3 and is moved up and down within a given range determined by upper and lower limit switches 4 and 5. In the chuck 1, there is arranged an air cylinder 6 for opening and closing the claws of chuck 1. The opening and closing positions of the chuck are detected by limit switches not shown in Fig. 1. The air cylinder 3 is supported by a rod 7 which is movably supported by a rail 8 by means of wheel 9. The rod 7 is secured to a piston rod 10 of an air cylinder 11 and is moved in right and left hand directions within a range determined by forward and backward limit switches 12 and 13. The mechanism so far explained is supported by pots 14 and 15. There is further arranged a belt-conveyer 16. The article 2 is first placed at the position shown by the solid line in Fig. 1 by means of a suitable transporting apparatus not shown. At first, the air cylinder 3 is driven to move the chuck 1 downward until the lower limit switch 5 is actuated. Before this downward movement of the air cylinder 3, the air cylinder 6 of the chuck 1 has been actuated to open the claws of the chuck such that the article 2 can be inserted into the opened claws. After the chuck 1 has been stopped at the lowermost position defined by the lower limit switch 5, the air cylinder 6 of the chuck 1 is energized to close the chuck and the article 2 is grasped by the claws of the chuck. Then, the air cylinder 3 is energized to move the chuck 1 upward and the article 2 grasped by the chuck 1 is also moved upward. This upward movement is continued until the upper limit switch 4 is actuated. After the upper limit switch 4 has been actuated, the air cylinder 11 is driven and the piston rod 10 is then moved in the right hand direction until the forward limit switch 12 is actuated. When the movement of the piston rod 10 is stopped, the article 2 is positioned above the belt-conveyer 16 and the lower surface of article 2 is positioned just above the upper surface of belt-conveyer 16. Therefore, the article 2 is placed on the belt-conveyer 16 in a stable manner. Then, the air cylinder 6 of the chuck 1 is driven again to open the claws of the chuck, so that the article 2 is released from the chuck and is transferred onto the belt-conveyer 16. After the article 2 has been placed on the belt-conveyer 16, the piston rod 10 is moved in the left hand direction by driving the air cylinder 11 until the backward limit switch 10 is actuated. By repeating the above operation, it is possible to transport a number of articles 2 onto the belt-conveyer 16 successively. It should be noted that the air cylinders 3, 6 and 11 are driven by driving solenoid valves provided in air supply pipes connected to the air cylinders.

In case of controlling the operation of the above mentioned transferring apparatus by means of the sequence controller, the sequence program is formed such that the program is executed in response to the execution signals supplied from the transferring apparatus. That is to say, the detection signals generated from the limit switches 4, 5, 12 and 13 of the apparatus are supplied to the sequence controller as the execution signals, and in response to these execution signals the sequence program is proceeded successively and command signals are supplied from the sequence controller to the transferring apparatus and the solenoid valves of the apparatus are energized in a given order.

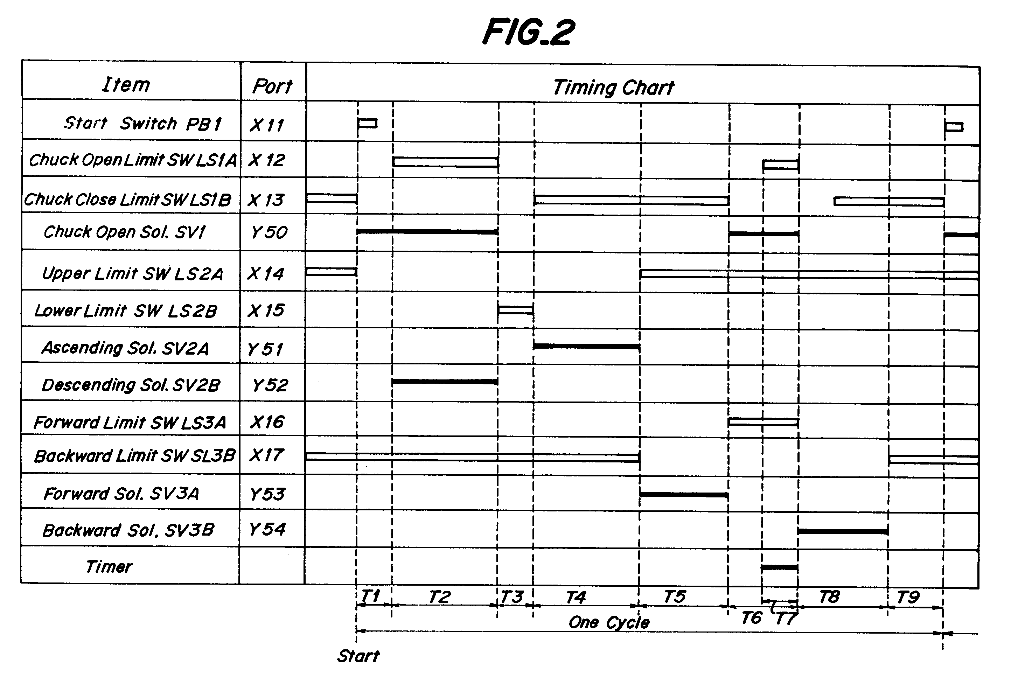

Fig. 2 is a time chart showing the above mentioned operation of the transferring apparatus. In Fig. 2, a solenoid valve for driving the air cylinder 6 of the chuck 1 to open the claws of the chuck is denoted by SV1, solenoid valves for energizing the air cylinder 3 to move the chuck 1 upward and downward, respectively are represented by SV2A and SV2B, and solenoid valves for driving the air cylinder 11 to move the chuck 1 forward and backward, respectively are denoted by SV3A and SV3B, and further the limit switches for detecting the open and close conditions of the chuck 1 are denoted by LS1A and LS1B, limit switches for detecting the uppermost and lowermost positions of the air cylinder 3 are expressed by LS2A and LS2B (in Fig. 1 denoted by 4 and 5), and the limit switches for detecting the forward and backward positions are shown by LS3A and LS3B (in Fig. 1 represented by 12 and 13).

When a start push button PB1 provided on a switch box connected to the sequence controller is pushed, a command signal for energizing the solenoid valve SV1 is supplied at a port Y50 and the solenoid valve SV1 is energized to operate the chuck 1 such that the claws of the chuck are opened. This requires a time period T1. As soon as the limit switch LS1 detects the full open of the chuck 1, the solenoid valve SV2B is actuated to move the chuck 1 downward until the limit switch LS2B generates the detection signal. It should be noted that this descending operation requires a time period T2. After the chuck 1 has moved into the lower position, the solenoid valve SV1 is deenergized for a time period T3 to close the claws of the chuck, so that the article 2 is clamped by the chuck. When the limit switch LS2 detects the closing of the claws after a time period T3, the solenoid valve SV2A is driven and the chuck 1 having the article 2 held therein is moved upward until the upper limit switch LS2A is actuated. This requires a time period T4. Then, the solenoid valve SV3A is energized to move the chuck 1 forward until the forward limit switch LS3A is actuated. This operation requires a time period T5. After that, the solenoid valve SV1 is actuated again to open the chuck 1, so that the article 2 is removed from the chuck and is transferred onto the belt-conveyer 16. As shown in Fig. 2, the chuck 1 is remained in the forward position for a time period T6, and usually the limit switch LS2A is actuated before the end of this time period T6. In the present embodiment, in order to positively transfer the article 2 onto the belt-conveyer 16, when the limit switch LS1A detects the opening of the chuck 1, a timer having a time period T7 is actuated. At the end of the timer period T7, the solenoid valve SV1 is deenergized and the solenoid valve SV3B is energized to move the chuck 1 into the backward position until the limit switches LS3B is actuated. This requires a time period T8. Among the above mentioned time period, the time periods T1, T2, T4, T5, T6 and T8 could not be previously determined in the sequence control program because the ends of these time periods are determined by the detection signals supplied from the limit switches, and therefore these time periods could not be previously set in the sequence control program. However, the time periods T3, T7 and T9 can be set arbitrarily, so that they can be determined in the sequence control program. In case checking or diagnosing the sequence control program, the former time periods could not be checked even if the program is investigated to any extent. According to the invention, a simulation program is formed such that the above mentioned uncertained time periods are set to suitable time periods by considering the speeds of the operation and the distances of the movement. For instance, the time period T2 may be determined by considering the speed of the descending movement of the chuck 1 by means of the air cylinder 3 and the distance between the uppermost and lowermost positions defined by the limit switches LS2A and LS2B, respectively. In the timing chart illustrated in Fig. 2, there are also shown I/O port Nos. of the sequence controller, and X represents ports which receives the detection signals supplied from the limit switches as the execution signal and Y denotes the ports for supplying the command signals to be supplied to the solenoid valves of the article transferring apparatus.

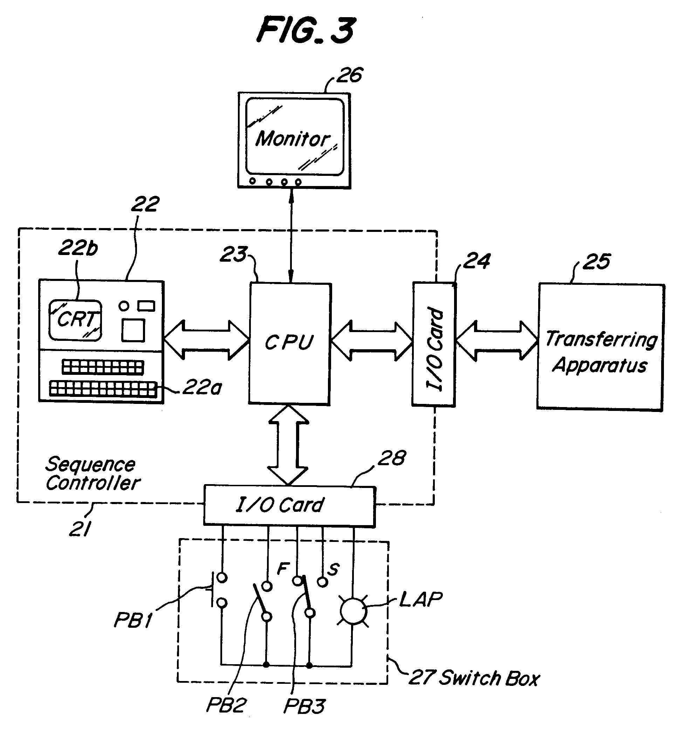

Fig. 3 is a schematic view showing the whole construction of an embodiment of the apparatus for carrying out the method of diagnosing the sequence program according to the invention. As stated above, according to one aspect of the present invention, the diagnosing operation is effected by utilizing the relays installed in the existent sequence controller. As is well known in the art, a sequence controller 21 comprises an operation unit 22 having a keyboard 22a and a monitor 22b, a central processor unit (CPU) 23 which includes calculating and controlling part, memory, registers, clock pulse generator and a number of B and M relays, and an I/O port card 24 for connecting the sequence controller to an apparatus 25 to be controlled by the sequence controller. Such a sequence controller has been well known in the art and is described in, for instance, User's Manual of programmable controller of type A3NCPU issued by a Japanese company, MITSUBISHI on May, 1988, so that the construction and operation of the sequence controller are not explained in detail in this specification. The diagnosing apparatus further comprises an additional monitor 26 connected to CPU 23 of the sequence controller 21 and having a display screen which is larger than the monitor 22b of the operation unit 22. To CPU 23 of the sequence controller 21 is further connected a switch box 27 via an I/O port card 28. The switch box 27 comprises the start push button PB1, monitor stop push button PB2, simulation speed changing switch PB3 and a monitor run indicating lamp LMP which is lit on when the simulation program is running. Therefore, when the simulation program is stopped by operating the monitor stop button PB2, the lamp LMP is lit off.

Now the method of forming the simulation program will be explained. In this explanation, only a part of the operation of the article transferring apparatus 25 is taken into consideration for the sake of simplicity. That is to say, a part of the operation for descending the chuck 1 from the uppermost position to the lowermost position and ascending the chuck from the lowermost position to the uppermost position after the given time period has elapsed.

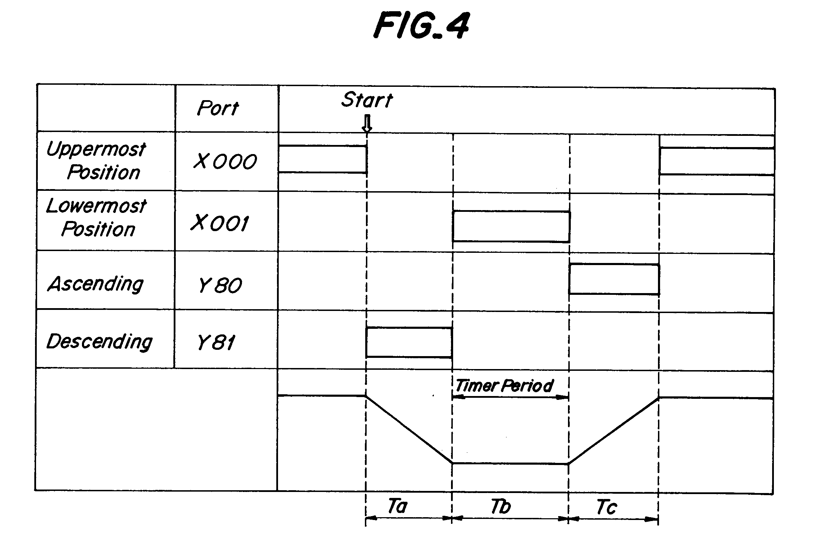

Fig. 4 is a timing chart of the simulation program for effecting the above mentioned part of the operation of the apparatus 25. It should be noted that in the initial condition the chuck 1 is in the uppermost position and the upper limit switch LS2B has been actuated. When the start button PB1 is actuated, a command signal for the solenoid valve SV2B for descending the chuck is supplied to a port Y81 of the I/O port card 24 for a time period Ta which corresponds to the time period T2 in Fig. 2, but is not equal to T2. At the end of the time period Ta, the execution signal is produced by the lower limit switch LS2B and is applied to a port X001 of the I/O port card 24. The simulation program is formed such that this execution signal is generated for a time period Tb corresponding to the time period T3 in Fig. 2. As explained above, the time period T3 is determined arbitrarily in the sequence control program, so that the time period Tb may be set to be equal to the time period T3 of the sequence control program or may be determined to the different from T3. After the time period Tb has elapsed, the command signal for the solenoid SDW2A for ascending the chuck 1 into the uppermost position is supplied to a port Y80 of the I/O port card 24 for a time period Tc. At the end of the time period Tc, an execution signal corresponding to the detection signal supplied from the upper limit switch LS2A is supplied to a port X000 of I/O the port card 24. According to the present invention, the above mentioned execution signals are generated by the link relays provided in the sequence controller.

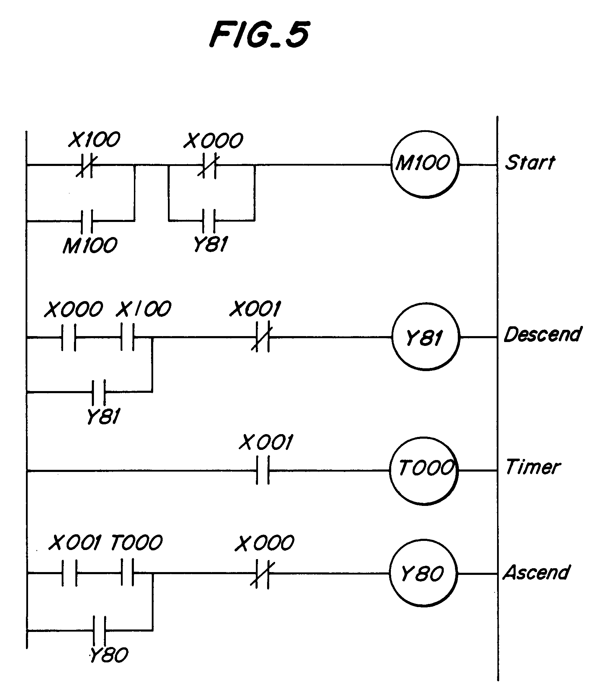

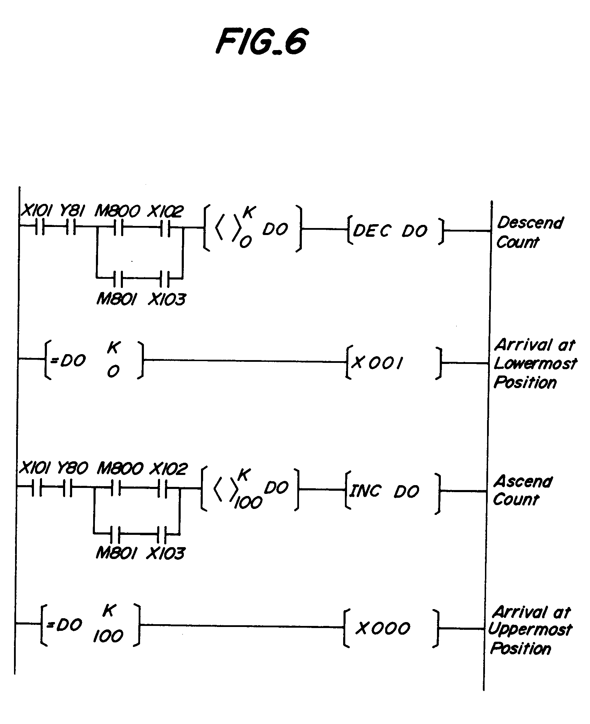

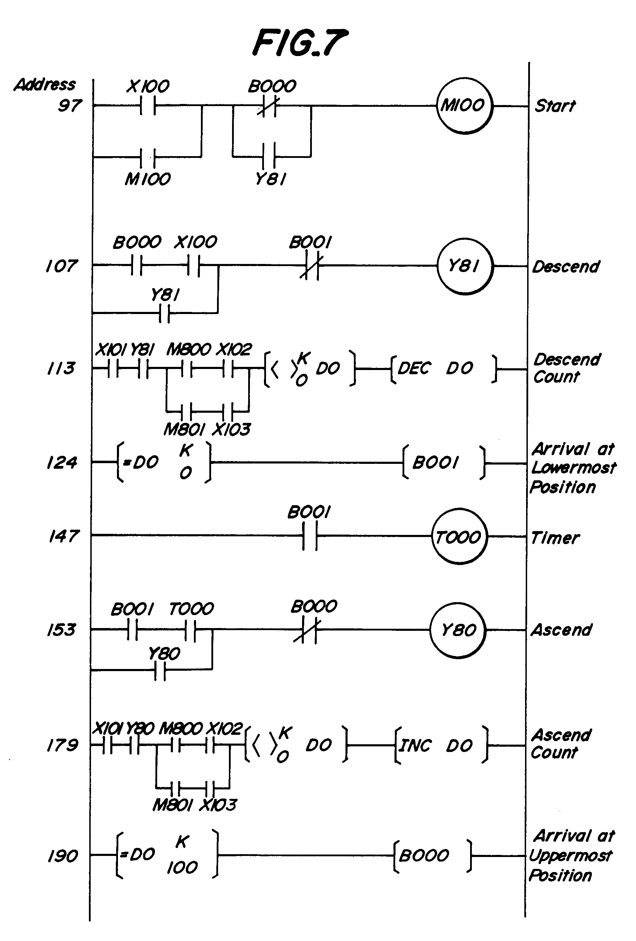

Fig. 5 is a schematic view showing a ladder diagram of the sequence program for carrying out the above mentioned operation, Fig. 6 is a ladder diagram representing the dummy operation program, and Fig. 7 is a ladder diagram showing the simulation program formed by combining the sequence program and the dummy operation program.

In Fig. 5, the first column denotes the start operation, and a relay X100 represents the actuation of the start push button PB1 shown in Fig. 3, a relay X000 the generation of the execution signal from the upper limit switch LS2A, a relay M100 for self-holding the start button PB1 after the start of the program, a relay Y81 the generation of the command signal for descending the chuck 1, and M100 denotes the generating of the clock pulse for running the sequence program. The first column may be interpreted in the following manner. When the start button PB1 is actuated (relay X100 is disclosed) while the upper limit switch LS2A is actuated (relay X000 is closed), there is produced a command signal M100 to initiate the generation of the clock pulse having a given frequency and the sequence program is started. As soon as the sequence program is initiated, the relay M100 is closed so that even if the start button PB1 is opened, the sequence program is not stopped. The second column represents the descending operation, and a relay X001 denotes the generation of the execution signal produced by the lower limit switch LS2B. The second column represents that when the chuck 1 is in the uppermost position (relay X000 is closed) and the start button PB1 is pushed (relay X100 is closed), the descending command Y81 is generated. Then, the chuck is moved downward until the execution signal is produced by the lower limit switch LS2B. As soon as the chuck 1 leaves the uppermost position, the relay X000 is opened. However, since the relay Y81 is closed, the descending condition is continued. This descending operation is continued until the relay X001 is opened, i.e. the lower limit switch LS2B is actuated. As denoted by the third column, when the execution signal is generated by the limit switch LS2B as denoted by the close of the relay X001, the timer T000 is actuated to count the time period Tb during which the chuck is remained in the lowermost position. The last column shows the ascending operation and a relay T000 represents the time up of the timer T000. When the lower limit switch LS2B is actuated (relay X001 is closed; and the timer T000 has counted the predetermined number of clock pulses (relay T000 is closed), the ascending command Y80 is generated and the relay Y80 is closed. The generation of the ascending command signal is stopped by the generation of the execution signal from the actuation of the upper limit switch LS2A (relay X000 is closed).

Fig. 6 shows the dummy operation program which represents the actual operation of the apparatus. In this dummy operation program, a relay X101 represents the actuation of the monitor stop push button PB2, and when the button is pushed the relay X101 is opened.

Relays X102 and X103 denote the operation of the monitor speed change switch PB3. When the switch PB3 is actuated into the fast mode, the relay X102 is closed, and when the switch is driven into the slow mode, the relay X103 is closed. In the present embodiment, in the fast mode, a relay M800 is closed and the clock pulse having the repetition period of 0.1 second is generated and in the slow mode a relay M801 is closed and the clock pulse having the repetition period of 1.0 second is generated. In Fig. 6, [ ] denotes the operation of the counter or register. The first column of the dummy operation program represents that when the monitor stop push button PB2 is not actuated (relay X101 is closed), the descending command signal is generated (relay Y81 is closed), the counter is operated to count down the clock 16 pulses from a present count value K to zero. The present count value may be set to 100. As stated above the clock pulse having either the shorter or longer repetition period selected by the switch PB3 is generated. [DEC DO] in Fig. 6 denotes the down-counting and [INC DO] represents the up-counting. The second column of the dummy operation program shows that when the counter has counted K clock pulses and its count value becomes equal to zero, the relay X001 is closed. This means that when the time period Ta has elapsed from the start of the descending movement, the dummy execution signal representing the arrival of the chuck into the lowermost position is generated. The third column denotes that when the monitor stop button PB2 is not pushed (relay X101 is closed and the ascending command signal is generated (relay Y80 is closed), the counter is operated to count up the clock pulses from a preset count value, i.e. zero to a given count value, i.e. 100. The last column shows that when the counter has counted up to the given count value of 100, the relay X000 is closed. This means that when the time period Tc has elapsed from the start of the ascending movement, the dummy execution signal representing the arrival of the chuck into the uppermost position is generated. It should be noted that the count value K may be set at will by considering the actual operation of the apparatus. For instance, since the moving speed of the chuck and the distance over which the chuck has to be moved are known, the time periods Ta and Tc may be calculated from these values.

Fig. 7 shows the simulation program which is formed by combining the above mentioned sequence program and dummy operation program with each other to form a preliminary simulation program, and then by exchanging items for generating the command signals by relays provided other than the transferring apparatus. As stated above, in the preferred embodiment of the method according to the present invention, the B relays inherently provided in the existent sequence controller are used as the items, i.e. the limit switches for producing the execution signals. Therefore, it is necessary to exchange the relays X000, X001 in the preliminary simulation program, i.e. the combination of the sequence control and dummy operation programs into B relays. In most cases this may be carried out simply by the instantaneous or simultaneous exchange operation. As shown in Fig. 7, the relays X000 and X001 are replaced by relays B000 and B001, respectively.

By executing the simulation program shown in Fig. 7, it is possible to operate the sequence controller 21 as if the transferring apparatus 25 is controlled by the sequence controller, while the transferring apparatus is not actually connected to the sequence controller, so that the operator can find any errors in the sequence program in an easy and positive manner. In this case, the execution of successive steps of the sequence program can be monitored on the display screen of the monitor device 22b of the sequence controller 21. Further, in the present embodiment, since the additional monitor 26 is connected to the sequence controller 21, it is possible to monitor the operation in greater detail.

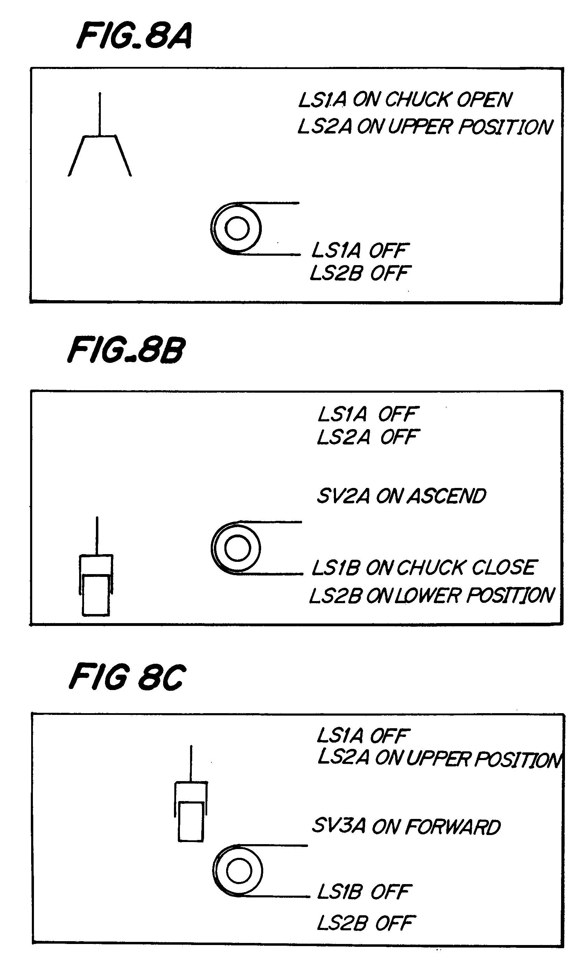

Fig. 8 is a schematic view of some examples of schematic images displayed on the display screen of the additional monitor 26. In Fig. 8A there is shown that the chuck 1 is positioned at the uppermost position and the claws of the chuck are opened. Fig. 8B shows the chuck 1 having the article 2 held therein is moving upward. Fig. 8C represents the chuck 1 is moving in the forward direction into the position above the belt-conveyer 16, while the article 2 is still clamped by the chuck. By displaying the above explained schematic images on the display screen of the additional monitor 26, the operator can confirm the operation of the transferring apparatus visually, so that the diagnosing operation can be performed much more easily and effectively. However, according to the invention it is not always necessary to display the above pictures by providing the additional monitor 26. As stated above, on the monitor 22b of the operation unit 22 of the sequence controller 21 there is displayed the ladder diagram of the sequence program, and portions of the ladder diagram which have been executed are displayed brightly by thick lines, so that those skilled in the art could recognize the progress of the sequence program by watching the display on the monitor 22b of the sequence controller 21.

Further according to the invention, the execution of the simulation program can be stopped at will by pushing the monitor stop button PB2, so that the operator can have an enough time to check the sequence program. Moreover, after stopping the execution of the simulation program, it is possible to selectively execute any step of the program by directly accessing the relevant step. For this purpose, to each steps of the simulation program are added respective addresses as illustrated in Fig. 7.

Moreover, according to the present invention by actuating the monitor speed changing switch PB3 provided on the switch box 27, it is possible to change the execution speed of the simulation program. That is to say, when a step in the program has to be investigated carefully, the switch PB3 is actuated into the slow mode so that the counter counts the clock pulses having the longer repetition period, and thus the operator can have an enough time to check the relevant step in detail. When the switch PB3 is set to the fast mode, the counter counts the clock pulses having the shorter repetition period, so that the time interval determined by the counting operation of the counter is shortened so that the relevant step can be executed fast. In this manner, the time for checking the sequence program can be shortened to a large extent.

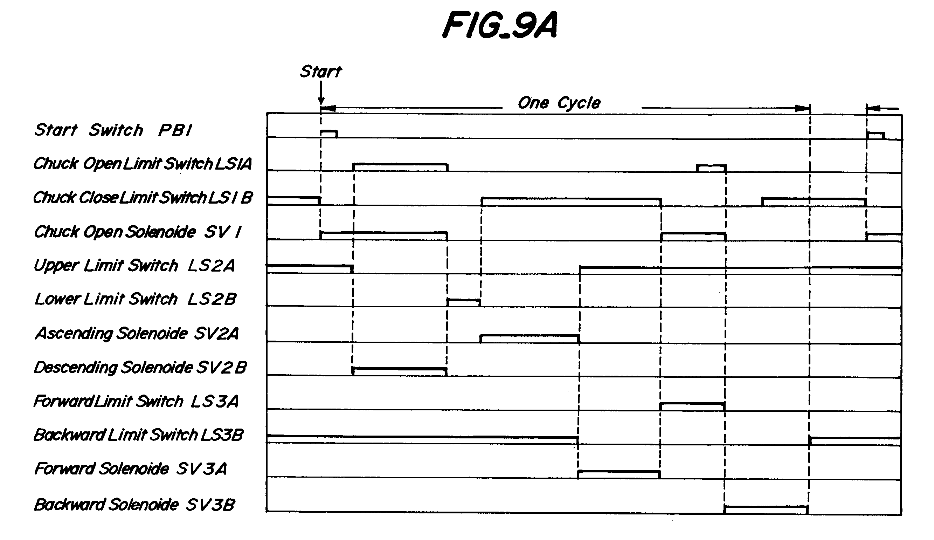

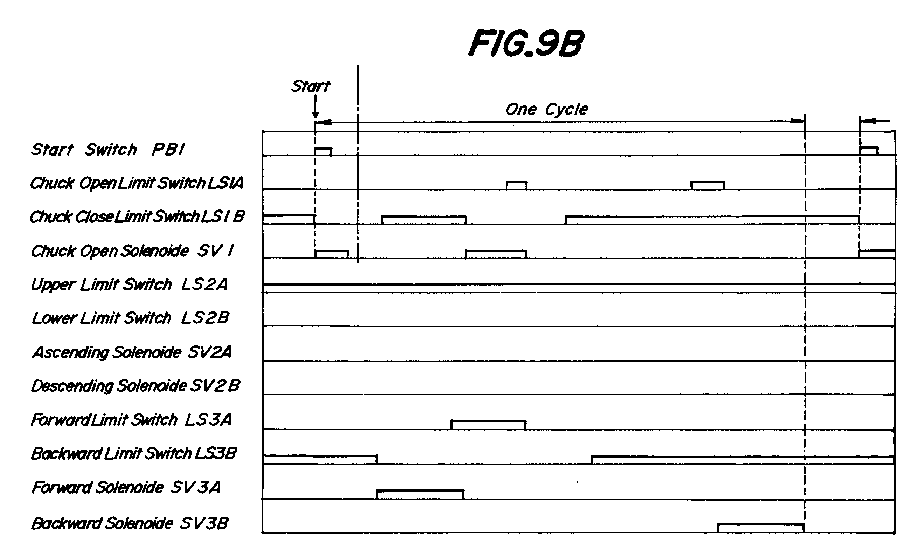

Figs. 9A and 9B are schematic views showing another embodiment of the image which is displayed on the monitor 22b of the sequence controller 21. In this image, the dummy operation signals corresponding to the execution signals and the command signals to be supplied to the various operating devices of the apparatus to be controlled by the sequence controller are displayed on the same time base, so that the operator can find errors in the sequence control program easily and positively by monitoring the thus displayed diagram. Fig. 9A shows the timing chart without error, and Fig. 9B illustrates the timing chart with an error in which the condition of the lower limit switch LS2B is erroneous.

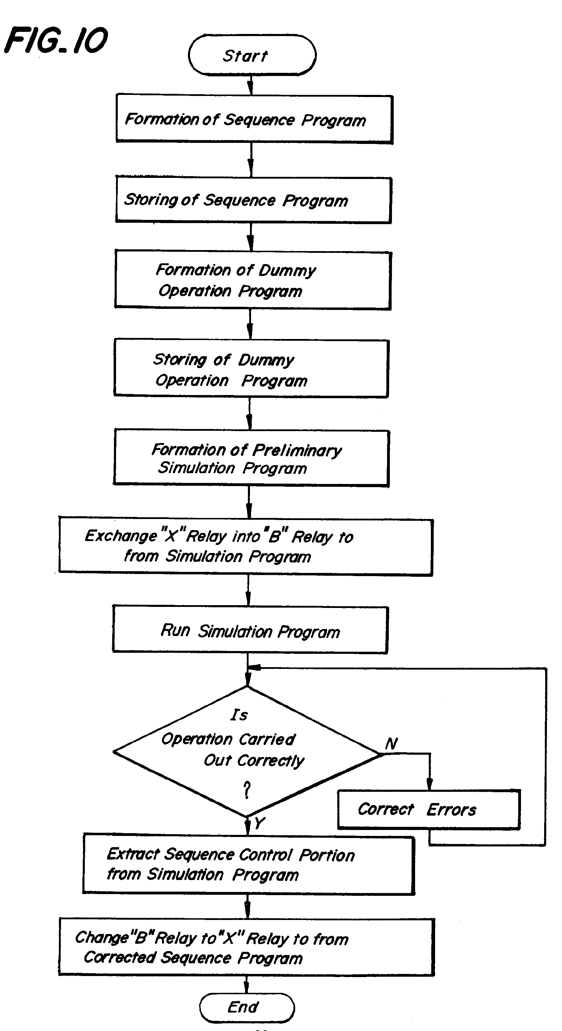

Fig. 10 is a flow chart showing the successive steps of the method of debugging the sequence control program according to the invention. At first the sequence control program shown in Fig. 5 is formed by using the keyboard 22a and monitor 22b of the sequence controller 21, and the thus formed sequence control program is stored in CPU 23 of the sequence controller. Next, the dummy operation program illustrated in Fig. 6 is formed by means of the keyboard 22a and monitor 22b of the sequence controller 21, and the thus formed dummy operation program is also stored in CPU 23 of the sequence controller 21. Then, the sequence control program and dummy operation program are combined with each other to form a preliminary simulation program in which the execution signal generating relays are still described by the actual device notations such as X000 and X001. Then the execution signal generating relays X000 and X001 are exchanged by the B relays such as B000 and B001 installed in the sequence controller 21 to form the simulation program. Next, the sequence controller is operated by means of the simulation program while the relays in the sequence controller 21 are utilized to generate the dummy operation signals corresponding to the execution signals. While the simulation program is carried out, the operation of the apparatus is displayed on the additional monitor 26 as well as on the monitor 22b of the sequence controller 21, so that the operator can judge easily, correctly and positively whether the apparatus can work correctly or not. If the apparatus does not work correctly, the sequence control program portion in the simulation program is corrected. During this checking step, the simulation program can be stopped by actuating the monitor stop push button PB2, and then a desired step in the simulation program may be executed by directly accessing an address of the relevant step with the aid of the keyboard 22a of the sequence controller 21. Further, when the monitor speed changing switch PB3 is actuated into the fast mode, steps of the simulation program are carried out at a high speed, so that the checking time period can be shortened. Moreover, by driving the switch PB3 into the slow mode, the steps of the simulation program are executed at a lower speed, and thus the operator can have an enough time to investigate the operation in greater detail. After the checking has been completed, the sequence control program portion is extracted from the simulation program. Finally, the B relays in the thus extracted sequence control program portion are changed back into the original X relays. In this manner, in the method according to the present invention it is possible to obtain the sequence control program in which any errors have been corrected without actually operating the apparatus by means of the sequence control program.

The present invention is not limited to the embodiment explained above, but many modifications and alternations may be conceived by those skilled in the art within the scope of the invention. Although it is very preferable to carry out the method according to the invention by utilizing the existent sequence controller, the method according to the invention may be performed by an apparatus which comprises the sequence controller 21, monitor 26 and switch box 27 shown in Fig. 3. In other words, the additional monitor 26 and switch box 27 may be installed in the sequence controller 21. Further the images displayed on the monitor 22b of the sequence controller 21 and additional monitor 26 are not limited to those illustrated in the drawings, but may take any other forms. For instance, each operation of the apparatus may be represented by linear bars whose lengths are changed in accordance with the proceedings of the operation. Moreover, in the above embodiment, flow charts showing the result of the execution of the simulation program are displayed on the monitor, but the may be formed by a printer as hard copies.

## Claims

1. A method of diagnosing a sequence control program for control of an apparatus (25) by a sequence controller (21), wherein the apparatus (25) is not required to be operated by the sequence controller (21) during diagnosis, comprising:
storing a sequence control program to be diagnosed in the sequence controller (21), which sequence control program is adapted to generate command signals for associated output components (Y50, Y51, Y52, Y53, Y54, Y80, Y81) connected to operate associated devices (SV1, SV2A, SV2B, SV3A, SV3B) of the apparatus (25), by performing processing on a series of input signals;
generating and storing a dummy operation program which is adapted to generate a series of dummy signals in response to the command signals generated by the sequence control program, the series of dummy signals being signals predicted to correspond to a series of execution signals to be generated by an associated series of (LS1A, LS1B, LS2A, LS2B, LS3A, LS3B) of the apparatus (25) in response to the command signals;
characterised in that:
the dummy operation program is stored in the sequence controller (21), and the method further comprises:
combining the sequence control program and the dummy operation program to form, respectively, a control part and a dummy part of a preliminary simulation program;
configuring the preliminary simulation program so that the series of input signals of the control part is obtained from the series of dummy signals generated by the dummy part via link components (B000, B001), which are not operatively connected to the series of input devices (LS1A, LS1B, LS2A, LS2B, LS3A, LS3B) of the apparatus (25), thereby to form a simulation program having respectively a control part and a dummy part;
executing the simulation program, while simulated operating conditions of the apparatus (25) are monitored;
verifying the simulated operation of the apparatus (25), and correcting errors in at least the control part of the simulation program;
extracting the control part of the simulation program to form a tested program;
re-configuring the tested program so that the series of input signals is obtained from the series of execution signals from the associated series of input devices (LS1A, LS1B, LS2A, LS2B, LS3A, LS3B) of the apparatus (25) via execution components (X12, X13, X14, X15, X16, X17, X000, X001) to form a diagnosed sequence control program.

2. A method according to claim 1, wherein the link components (B000, B001) are provided in the sequence controller (21).

3. A method according to claim 1 or claim 2, wherein the dummy operation program comprises counting clock pulses with a plurality of counters corresponding to the dummy signals, and generating each dummy signal when the corresponding counter has reached a predetermined count.

4. A method according to claim 3, wherein the execution of the simulation program is halted by stopping the counting operation of the counters.

5. A method according to claim 4, wherein after halting the execution of the simulation program, a selected step is executed by directly accessing the address of the relevant step.

6. A method according to claim 3, wherein the speed of the execution of the simulation program is changed by changing repetition frequencies of the clock pulses.

7. A method according to any one of the preceding claims, wherein the simulated operating conditions of the apparatus (25) are displayed on a monitor (22b) of the sequence controller (21).

8. A method according to claim 7, wherein the simulation program is displayed as a ladder diagram and the execution of the simulation program is displayed such that parts of the ladder diagram corresponding to steps which have been executed are displayed by thick lines having high brightness.

9. A method according to any one of claims 1 to 6, wherein the simulated operating conditions of the apparatus (25) are displayed on a monitor (26) which is provided separately from the monitor (22b) of the sequence controller (21).

10. A method according to claim 9, wherein the simulated operating conditions of the apparatus (25) are shown by schematic images of the apparatus (25) in various operating conditions.

## Patentansprüche

1. Verfahren zur Diagnose eines Sequenzsteuerprogramms zur Steuerung einer Vorrichtung (25) durch einen Sequenzcontroller (21), worin es nicht erforderlich ist, daß die Vorrichtung (25) während der Diagnose durch einen Sequenzcontroller betrieben wird, umfassend:
das Speichern eines zu diagnostizierenden Sequenzsteuerprogramms im Sequenzcontroller (21), welches Sequenzsteuerprogramm ausgebildet ist, Befehlssignale durch die Verarbeitung einer Reihe von Eingangssignalen für zugehörige Ausgangskomponenten (Y50, Y51, Y52, Y53, Y54, Y80, Y81) zu erzeugen, die verbunden sind, um zugehörige Geräte (SV1, SV2A, SV2B, SV3A, SV3B) der Vorrichtung (25) zu betreiben;
das Erzeugen und Speichern eines Scheinbetriebsprogramms, das eine Reihe an Scheinsignalen als Reaktion auf die durch das Sequenzsteuerprogramm erzeugten Befehlssignale erzeugt, wobei sich die Reihe von Scheinsignalen aus Signalen zusammensetzt, die laut Vorhersage einer Reihe von Ausführungssignalen entspricht, die durch eine zugehörige Serie von (LS1A, LS1B, LS2A, LB2B, LS3A, LS3B) der Vorrichtung (25) als Reaktion auf die Befehlssignale zu erzeugen sind;
dadurch gekennzeichnet, daß
das Scheinbetriebsprogramm im Sequenzcontroller (21) gespeichert ist und das Verfahren weiters umfaßt:
das Kombinieren des Sequenzsteuerprogramms und des Scheinbetriebsprogramms, um jeweils einen Steuerteil und einen Scheinteil eines vorläufigen Simulationsprogramms zu bilden;
das Konfigurieren des vorläufigen Simulationsprogramms, sodaß die Reihe an Eingangssignalen des Steuerteils aus der Reihe an Scheinsignalen gewonnen wird, die durch den Scheinteil über Verbindungskomponenten (B000, B001) erzeugt wird, die nicht operativ mit der Reihe an Eingangsgeräten (LS1A, LS1B, LS2B, LS3A, LS3B) der Vorrichtung verbunden sind, um dadurch ein Simulationsprogramm mit jeweils einem Steuerteil und einem Scheinteil zu schaffen;
das Ausführen des Simulationsprogramms, während simulierte Betriebsbedingungen der Vorrichtung (25) überwacht werden;
das Verifizieren des simulierten Betriebs der Vorrichtung (25) und das Korrigieren von Fehlern zumindest im Steuerteil des Simulationsprogramms;
das Extrahieren des Steuerteils des Simulationsprogrammes zur Bildung eines geprüften Programms;
das erneute Konfigurieren des geprüften Programms, sodaß die Reihe an Eingangssignalen aus der Reihe an Ausführungssignalen aus der zugehörigen Reihe an Eingangsgeräten (LS1A, LS1B, LS2A, LS2B, LS3A, LS3B) der Vorrichtung (25) über die Ausführungskomponenten (X12, X13, X14, X15, X17, X000, X001) erhalten wird, um ein diagnostiziertes Sequenzsteuerprogramm zu bilden.

2. Verfahren nach Anspruch 1, worin die Verbindungskomponenten (B000, B001) im Sequenzcontroller (21) angeordnet sind.

3. Verfahren nach Anspruch 1 oder Anspruch 2, worin das Scheinbetriebsprogramm das Zählen von Taktimpulsen mit einer Vielzahl von Zählern, die den Scheinsignalen entsprechen, sowie das Erzeugen jedes Scheinsignals umfaßt, wenn der entsprechende Zähler einen vorbestimmten Wert erreicht hat.

4. Verfahren nach Anspruch 3, worin die Ausführung des Simulationsprogramms durch das Stoppen des Zählvorgangs der Zähler angehalten wird.

5. Verfahren nach Anspruch 4, worin nach dem Anhalten der Ausführung des Simulationsprogramms ein ausgewählter Schritt durch direkten Zugriff zur Adresse des relevanten Schritts ausgeführt wird.

6. Verfahren nach Anspruch 3, worin die Geschwindigkeit der Ausführung des Simulationsprogramms durch Verändern der Wiederholfrequenzen der Taktimpulse verändert wird.

7. Verfahren nach einem der vorhergehenden Ansprüche, worin die simulierten Betriebsbedingungen der Vorrichtung (25) auf einem Monitor (22b) des Sequenzcontrollers (21) angezeigt werden.

8. Verfahren nach Anspruch 7, worin das Simulationsprogramm als ein Leiterdiagramm angezeigt wird und die Ausführung des Simulationsprogramms solcherart angezeigt wird, daß Teile des Leiterdiagramms, die ausgeführten Schritten entsprechen, durch dicke, hell strahlende Linien angezeigt werden.

9. Verfahren nach einem der Ansprüche 1 bis 6, worin die simulierten Betriebsbedingungen der Vorrichtung (25) auf einem Monitor (26) angezeigt werden, der getrennt vom Monitor (22b) des Sequenzcontrollers (21) vorgesehen ist.

10. Verfahren nach Anspruch 9, worin die simulierten Betriebsbedingungen der Vorrichtung (25) durch schematische Bilder der Vorrichtung (25) in verschiedenen Betriebsbedingungen gezeigt werden.

## Revendications

1. Procédé de diagnostic d'un programme de contrôle séquentiel pour le contrôle d'un dispositif (25) par un contrôleur séquentiel (21), dans lequel on n' exige pas au dispositif (25) d'être activé par le contrôleur séquentiel (21) pendant le diagnostic, comprenant :
mémoriser un programme de contrôle séquentiel à diagnostiquer dans le contrôleur séquentiel (21), lequel programme de contrôle séquentiel est adapté pour produire des signaux de commande à des composants de sortie associés (Y50, Y51, Y52, Y53, Y54, Y80, Y81) reliés pour activer des dispositifs associés (SV1, SV2A, SV2B, SV3A, SV3B) du dispositif (25), en accomplissant un traitement sur une série de signaux d'entrée;
produire et mémoriser un programme d'opérations fictives qui est adapté pour produire une série de signaux fictifs en réponse aux signaux de commande produits par le programme de contrôle séquentiel, la série de signaux fictifs étant des signaux prédits pour correspondre à une série de signaux d'exécution à produire par une série associée (LS1A, LS1B, LS2A, LS2B, LS3A, LS3B) du dispositif (25) en réponse aux signaux de commande;
caractérisé en ce que :
le programme d'opérations fictives est mémorisé dans le contrôleur séquentiel (21), et le procédé comprend de plus :
combiner le programme de contrôle séquentiel et le programme de fonctionnement fictif pour former, respectivement, une partie de contrôle et une partie fictive d'un programme de simulation préliminaire;
configurer le programme de simulation préliminaire de sorte que la série de signaux d'entrée de la partie de contrôle est obtenue à partir de la série de signaux fictifs produits par la partie fictive via des composants de liaison (BOOO, BOO1), qui ne sont pas opérativement reliés à la série de dispositifs d'entrée (LS1A, LS1B, LS2A, LS2B, LS3A, LS3B) du dispositif (25), pour former de la sorte un programme de simulation ayant respectivement une partie de contrôle et une partie fictive;
exécuter le programme de simulation, pendant que les conditions de fonctionnement simulées du dispositif (25) sont contrôlées;
vérifier le fonctionnement simulé du dispositif (25), et corriger les erreurs dans au moins la partie de contrôle du programme de simulation;
extraire la partie de contrôle du programme de simulation pour former un programme testé;
reconfigurer le programme testé de sorte que la série de signaux d'entrée est obtenue à partir de la série de signaux d'exécution de la série associée du dispositif d'entrée (LS1A, LS1B, LS2A, LS2B, LS3A, LS3B) du dispositif (25) via des composants d'exécution (X12, X13, X14, X15, X16, X17, X000, X001) pour former un programme de contrôle séquentiel diagnostiqué.

2. Procédé selon la revendication 1, dans lequel les composants de liaison (B000, B001) sont prévus dans le contrôleur séquentiel (21).

3. Procédé selon la revendication 1 ou la revendication 2, dans lequel le programme de fonctionnement fictif comprend le comptage des impulsions d'horloge par un certain nombre de compteurs correspondants aux signaux fictifs, et produire chaque signal fictif lorsque le compteur correspondant a atteint un compte prédéterminé.

4. Procédé selon la revendication 3, dans lequel l'exécution du programme de simulation est stoppée en arrêtant l'opération de comptage des compteurs.

5. Procédé selon la revendication 4, dans lequel après arrêt de l'exécution du programme de simulation, une étape choisie est exécutée en accédant directement à l'adresse de l'étape pertinente.

6. Procédé selon la revendication 3, dans lequel la vitesse de l'exécution du programme de simulation est changée en changeant des fréquences de répétition des impulsions d'horloge.

7. Procédé selon l'une quelconque des revendications précédentes, dans lequel les conditions de fonctionnement simulé du dispositif (25) sont visualisées sur un moniteur (22b) du contrôleur séquentiel (21).

8. Procédé selon la revendication 7, dans lequel le programme de simulation est visualisé comme un diagramme en échelle et l'exécution du programme de simulation est visualisée de sorte que les parties du diagramme en échelle correspondant aux étapes qui ont été exécutées sont visualisées par des traits épais ayant une luminosité élevée.

9. Procédé selon l'une quelconque des revendications 1 à 6, dans lequel les conditions de fonctionnement simulé du dispositif (25) sont visualisées sur un moniteur (26) qui est prévu séparément du moniteur (22b) du contrôleur séquentiel (21).

10. Procédé selon la revendication 9, dans lequel les conditions de fonctionnement simulé du dispositif (25) sont représentées par des images schématiques du dispositif (25) dans diverses conditions de fonctionnement.
